# EUROPEAN PATENT SPECIFICATION

(11) **EP 1 411 284 B1**
(45) Date of publication and mention of the grant of the patent: **22.03.2006**
(21) Application number: 03380165.5
(22) Date of filing: 09.07.2003
(51) Int. Cl.: F16K 15/06

(54) **A check valve**
Rückschlagventil
Clapet anti-retour

(30) Priority: 15.10.2002 ES 200202358
(43) Date of publication of application: 21.04.2004
(73) Proprietor: Genebre, S.A., 08908 l'Hospitalet de Llobregat (Barcelona) (ES)
(72) Inventor: Monterde Fabregat, Lluis, 08908 L'Hospitalet de Llobregat (ES)
(74) Representative: Pastells Teixido, Manuel

(56) References cited:
- EP-A- 1 217 271
- GB-A- 350 834
- US-A- 4 518 329
- PATENT ABSTRACTS OF JAPAN vol. 006, no. 260 (M-180), 18 December 1982 (1982-12-18) & JP 57 154565 A (YUTAKA YAMADA), 24 September 1982 (1982-09-24)

## Description

Several check valve models are already known which comprise a two- or one-piece tubular body to whose inside a valve member is fitted in an axially shiftable arrangement, said valve member being resiliently biased towards its closed position.

In patent US-4518329 the valve member is axially provided with two opposite stems being apt to guide it; in patent JP-57154565 the valve member is guided by only one of its opposite stems, the other one being threaded in order to receive a nut being apt to retain the resilient, disc-shaped seal being apt to establish the tight seal; and in the European patent 1217271 the valve member is axially bored and fitted on an only stem, the tight seal being obtained with an O-ring being arranged at the periphery of the valve member.

Exemplary valves of this type to be cited are those corresponding to patents US-4528329, JP-57154565 and EP 1217271, this latter being owned by this very applicant.

The check valve being the object of this invention has a one-piece tubular body and is characterised by having improved the makeup of the valve member as well as its fitting to the inside of the valve body in order to facilitate its manufacture and to easily allow the replacement of the valve member or its repair.

A disc makes up this valve's valve member and from one of its faces extends into a stem, a separate stem being fitted to its other face in a coaxial arrangement with respect to the integral stem of said disc.

This integral stem of the disc guidedly extends through a central passage of a ring being threadingly fitted to the outlet opening of the tubular body whereas the separate stem guidedly extends through a central passage being provided in the inlet opening of said tubular body.

A flat, resilient ring is fitted to the sealing face of the valve disc and is thus apt to abuttingly seal against a circular seat being formed in the inlet opening of the tubular body, a disc-shaped enlargement of the separate stem abuttingly resting on said resilient ring. These and other characteristics will be best made apparent by the following detailed description whose understanding will be made easier by the accompanying sheet of drawings showing a practical embodiment cited only by way of example not limiting the scope of the present invention, as defined in the appended claim..

In the drawings:

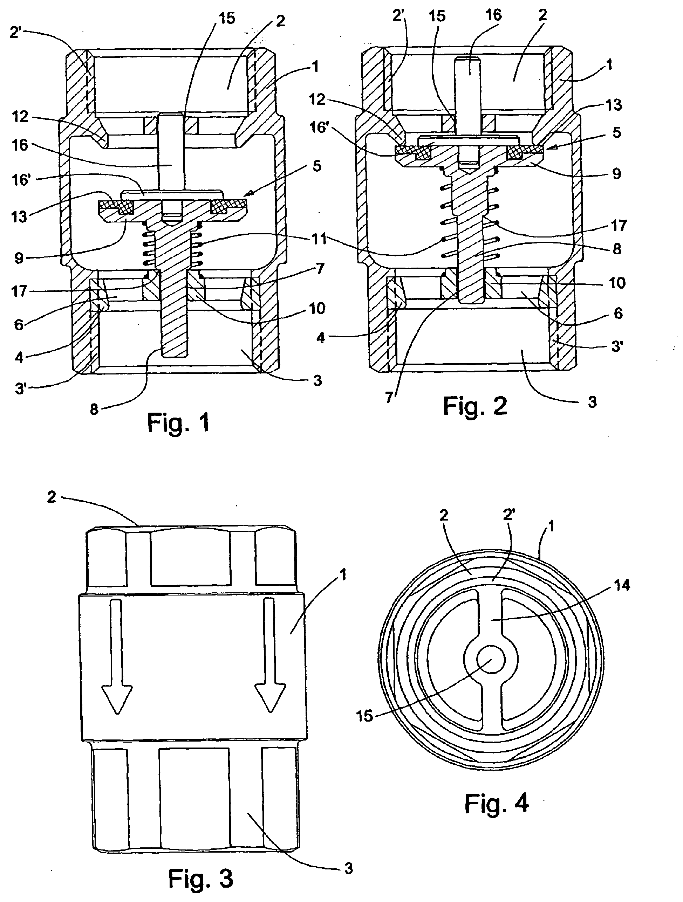

Figs. 1 and 2 represent in a sectional elevation the check valve being the object of the invention in the open and closed positions, respectively; and
Figs. 3 and 4 illustrate the tubular body of the valve in an elevational view and in a plan-view, respectively.

According to the drawings this check valve comprises a one-piece tubular body (1) forming an inlet opening (2) and an opposite outlet opening (3), both of these openings being internally threaded at (2') and (3'), respectively.

A ring (4) is threadingly fitted to the outlet opening (3), is apt to retain the valve member (5), and forms a diametral length (6) centrally determining a passage (7), the stem (8) integrally forming part of the valve disc (9) guidedly extending through said passage (7), this latter forming a bushing (10) against which the spring (11) being fitted around the stem (8) abuttingly rests at one of its ends, said spring at its other end abuttingly urging the valve disc (9).

In the inlet opening (2) the body (1) forms the circular seat (12), the valve disc (9) being apt to abuttingly seal against said seat, a flat, resilient ring (13) being for such a purpose fitted to the sealing face of said valve disc, said inlet opening (2) having been provided with a transversal length (14) centrally forming a passage (15), a separate stem (16) being fitted to the valve disc (9) in a coaxially opposite arrangement with respect to the stem (8) of said valve disc extending through said passage, said separate stem (16) forming a disc-shaped enlargement (16') abuttingly resting on the resilient ring (13).

Halfway along its length the stem (8) of the valve disc (9) has a peripheral shoulder (17) being apt to abuttingly engage the bushing (10) making up the central passage (7) thus delimiting the movement of the valve member (5) in its open position.

## Claims

1. A check valve comprising a one-piece tubular body (1) to whose inside a valve member (5) is fitted in an axially shiftable arrangement, said valve member being resiliently biased (11) towards its closed position to thus abuttingly seal against a circular seat (12) being formed in the inlet opening (2) of the tubular body (1), a disc (9) making up the valve member (5) and from one of its faces extending into an integral system (8), wherein a flat, resilient ring (13) is fitted to the other, sealing, face of the valve disc (9), and the integral stem (8) of the valve disc (9) guidedly extends through a central passage (7) of a ring (4) being threadingly fitted to the outlet opening (3) of the tubular body (1) **characterised in** a separate stem (16) being fitted to the sealing face of the valve disc in a coaxial arrangement with respect to the integral stem (8) of the valve disc (9), a disc-shaped enlargement (16') of the separate stem (16) abuttingly resting on said resilient ring, and the separate stem (16) guidedly extending through a central passage (15) being provided in the inlet opening (2) of said tubular body (1).

## Patentansprüche

1. Rückschlagventil, das einen einstückigen, rohrförmigen Ventilkörper (1) aumfaßt, der innerlich mit einem in einer axial verschiebbaren Anordnung angeordneten Ventilverschlußteil (5) bestückt ist, wobei der genannte Ventilverschlußteil federnd (11) nach seiner Schließstellung vorgespannt ist und so in anstoßender Anordnung gegen einen in der Einlaßöffnung (2) des rohrförmigen Ventilkörpers (1) gebildeten, kreisförmigen Sitz (12) einen dichten Verschluß herstellt, wobei der Ventilverschlußteil (5) aus einer Scheibe (9) besteht, die sich einstückig von einer ihrer Seiten aus unter Bildung eines Schafts (8) ausstreckt, wobei ein flacher, federnder Ring (13) auf der anderen, dichtschließenden Seite der Ventilscheibe (9) angebracht ist, und der mit der obengenannten Ventilscheibe (9) einstückiger Schaft (8) sich in einer geführten Anordnung durch eine zentrale Durchführung (7) erstreckt, die in einem in der Auslaßöffnung (3) des rohrförmigen Ventilkörpers (1) eingeschraubten Ring (4) vorgesehen ist; **gekennzeichnet durch** einen separaten Schaft (16), der auf der dichtschließenden Seite der Ventilscheibe in gleichachsiger Anordnung in bezug auf den mit der obengennanten Ventilscheibe (9) einstückigen Schaft (8) angebracht ist, **durch** eine auf dem obengenannten, federnden Ring in anstoßender Anordnung abgestützte, scheibenförmige Ausweitung (16') des separaten Schafts (16), und **dadurch**, daß der separater Schaft (16) sich in geführter Anordnung **durch** eine in der Einlaßöffnung (2) des obengenannten, rohrförmigen Ventilkörpers (1) vorgesehene, zentrale Durchführung (15) erstreckt.

## Revendications

1. Soupape de retenue qui comprend un corps tubulaire monopièce (1) à l'intérieur duquel est monté, de façon axialement déplaçable, un élément obturateur (5) qui est élastiquement biaisé (11) vers sa position de fermeture et ainsi effectue une fermeture hermétique en s'abutant contre un siège circulaire (12) formé dans la bouche d'entrée (2) du corps tubulaire (1), l'élément obturateur (5) étant constitué par un disque (9) qui se prolonge par une de ses faces en formant un axe (8), le disque obturateur (9) comprenant dans l'autre face, qui est celle à fermeture hermétique, l'accouplement d'un anneau élastique plat (13), et l'axe (8), qui forme une seule pièce avec ledit disque obturateur (9), passant de façon guidée par un pas central (7) qui est prévu dans un anneau (4) qui est vissé dans la bouche de sortie (3) du corps tubulaire (1); **caractérisée par** un axe indépendant (16) qui est monté sur la face à fermeture hermétique du disque obturateur de façon coaxiale par rapport à l'axe (8) qui forme une seule pièce avec ledit disque obturateur (9), par une expansion (16') de l'axe indépendant (16) qui est constituée en forme de disque et qui s'abute contre ledit anneau élastique, et en ce que l'axe indépendant (16) passe de façon guidée par un pas central (15) prévu dans la bouche d'entrée dudit corps tubulaire (1).
